# EUROPEAN PATENT APPLICATION

(11) **EP 4 485 678 A1**
(43) Date of publication of application: **01.01.2025**
(21) Application number: 23183525.7
(22) Date of filing: 05.07.2023
(51) Int. Cl.: H01M 50/569, H01M 50/581, H01M 50/583

(54) **POLE AND BATTERY**

(30) Priority: 29.06.2023 CN 202310792201
(71) Applicant: Cornex New Energy Co., Ltd., Xiaogan Hubei 432099 (CN)
(72) Inventor: JIANG, Yuanfu, Xiaogan, Hubei, 432099 (CN); LI, Ji, Xiaogan, Hubei, 432099 (CN)
(74) Representative: advotec.

(57) **Abstract**

A pole (100) includes a pole body (1) and an expansion material (2). The pole body (1) includes a weak section (11), a cross-sectional area of the pole body (1) has a lower limit value at the weak section (11) to allow the pole body (1) to be electrically fused at the weak section (11) when an overload current flows through the pole body (1). The expansion material (2) is arranged in the weak section (11), and configured to expand when an ambient temperature or a temperature of the pole body (1) is higher than a set temperature, to allow the pole body (1) to be broken at the weak section (11) and to realize a breakage protection.

## Description

### FIELD

The present disclosure relates to a field of battery protection, and more particularly to a pole capable of performing a breakage protection and a battery using the pole.

### BACKGROUND

The battery is a device that converts the chemical energy into the electrical energy. In recent years, with the rise of the new energy industry, the battery has been applied to more and more fields. In order to improve the using safety of the battery, some batteries are usually provided with a safeguarding structure such as a fuse, but the safeguarding structure in the related art is mostly arranged to a connecting piece. When the connecting piece is fused under the action of an overload current, a high-temperature molten globule resulted from fusing may drop to a pole group of the battery cell, which greatly reduces the using safety of the battery. Moreover, most batteries in related art do not have the function of high-temperature protection. When the battery has a thermal runaway or the external environment temperature is too high, the battery still has a high safety risk.

### SUMMARY

Embodiments of the present disclosure seek to solve at least one of the problems in the related art to at least some extent.

Therefore, the embodiments of a first aspect of the present disclosure provide a pole for a battery, which has both a breakage protection for an overload current and a breakage protection for overheating, thus fully ensuring the using safety of a battery.

The embodiments of a second aspect of the present disclosure further provide a battery including the above pole.

The pole according to the embodiments of the present disclosure includes: a pole body including a weak section, a cross-sectional area of the pole body having a lower limit value at the weak section to allow the pole body to be electrically fused at the weak section when an overload current flows through the pole body; and an expansion material arranged in the weak section, and configured to expand when an ambient temperature or a temperature of the pole body is higher than a set temperature, to allow the pole body to be broken at the weak section and to realize a breakage protection.

The pole according to the embodiments of the present disclosure have both the breakage protection for the overload current and the breakage protection for overheating, thus fully ensuring the using safety of a battery.

Optionally, the weak section is located in a middle part of the pole body; and/or, the weak section has a plurality of cavities, and the expansion material is arranged in at least a part of the cavities.

Optionally, the pole body includes a terminal and a base, and the weak section is connected between the terminal and the base.

Optionally, the weak section includes a first end plate and a second end plate, the first end plate is arranged at one end of the weak section, the weak section is electrically connected with the terminal through the first end plate, the second end plate is arranged at the other end of the weak section, and the weak section is electronically connected with the base through the second end plate.

Optionally, the weak section includes a plate portion, the plate portion is connected between the first end plate and the second end plate, a first cavity is defined on one side of the plate portion, a second cavity is defined on the other side of the plate portion, and the expansion material is arranged in one of the first cavity and the second cavity, and is configured to break the plate portion when expanding.

Optionally, the expansion material is located in the first cavity, the plate portion has a groove, and the groove is located on a side of the plate portion facing the second cavity; and/or, the plate portion is an arc-shaped plate and protrudes towards the second cavity, and the expansion material is arranged in the first cavity.

Optionally, the weak section includes a first cover portion and a second cover portion, the first cover portion is connected with the first end plate, a third cavity is defined between the first cover portion and the first end plate, the second cover portion is connected with the second end plate, a fourth cavity is defined between the second cover portion and the second end plate, the first cover portion and the second cover portion abut against each other or are electrically connected through a conductor, an annular cavity is defined between the first cover portion and the second cover portion, and the expansion material is arranged in the annular cavity.

Optionally, an expansion temperature of the expansion material is lower than a thermal contraction temperature of a diaphragm of the battery and higher than a thermal safety control temperature of the battery; and/or, the expansion material includes at least one of a polyurethane foaming agent and a PP foaming agent.

The battery according to the embodiments of the present disclosure includes an insulator and a pole according to any one of the above embodiments. The weak section is fitted in the insulator, the expansion material is located on an outer peripheral side of the weak section, and the insulator has a channel for filling the expansion material to the weak section.

Optionally, the pole includes a first protrusion and a second protrusion, the weak section is located between the first protrusion and the second protrusion, the insulator has a first limiting groove and a second limiting groove, the first protrusion is fitted in the first limiting groove, and the second protrusion is fitted in the second limiting groove.

### BRIEF DESCRIPTION OF THE DRAWINGS

Fig. 1 is a sectional view of a pole according to an embodiment of the present disclosure.
Fig. 2 is a longitudinal sectional view of a weak section of a pole according to an embodiment of the present disclosure.
Fig. 3 is a sectional view taken along line A-A in Fig. 2.
Fig. 4 is a longitudinal sectional view of a weak section of a pole according to another embodiment of the present disclosure.
Fig. 5 is a sectional view taken along line B-B in Fig. 4.
Fig. 6 is a longitudinal sectional view of a weak section of a pole according to another embodiment of the present disclosure.
Fig. 7 is a sectional view taken along line C-C in Fig. 6.
Fig. 8 is a sectional view of a battery according to an embodiment of the present disclosure.

### DETAILED DESCRIPTION

Embodiments of the present disclosure will be described in detail below. Examples of the embodiments are illustrated in the drawings. The embodiments described below with reference to the drawings are illustrative, and intended to explain the present disclosure. The embodiments shall not be construed to limit the present disclosure.

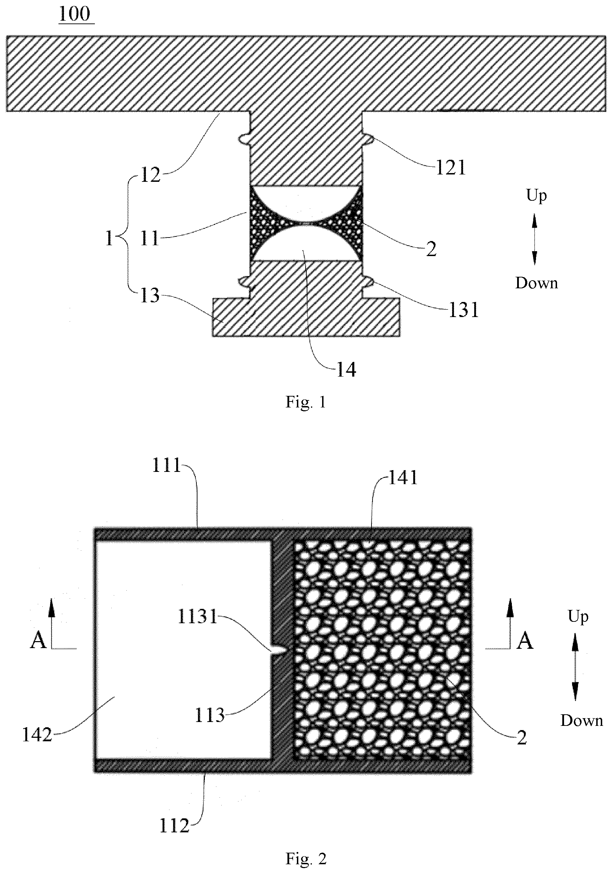

A pole 100 according to embodiments of the present disclosure includes a pole body 1 and an expansion material 2. As shown in Fig. 1, the pole body 1 may be an integral structure, for example, the pole body 1 may be made of aluminum, copper, cobalt, zinc, etc. A middle part of the pole body 1 may be hollowed out. After being hollowed out, the pole body 1 may have some cavities 14, so that a weak section 11 may be formed in the middle part of the pole body 1. A cross-sectional area of the pole body 1 (a section perpendicular to an up-down direction in Fig. 1) has a lower limit value at the weak section 11, i.e., the minimum cross-sectional area of the pole body 1 is located at the weak section 11.

Therefore, the structural strength of the pole 100 at the weak section 11 can be the lowest, and the resistance of the pole 100 at the weak section 11 is also larger. When an overload current flows through the pole body 1, the larger resistance at the weak section 11 will make the weak section 11 generate more heat, to allow the pole body 1 to be electrically fused at the weak section 11, so that a battery using the pole 100 can stop discharging or being charged by an external circuit, and a breakage protection for the overload current is realized.

The expansion material 2 may include a high-temperature expanding agent, specifically a foaming agent such as a polyurethane foaming agent and a polypropylene (PP) foaming agent. The expansion material 2 may be filled at the weak section 11. When an ambient temperature or a temperature of the pole body 1 is higher than a set temperature (which may be a safety control temperature allowed by the battery in use, or a temperature slightly higher than the safety control temperature), the expansion material 2 will expand, and an expansion force generated by the expansion may act on the weak section 11, so that the weak section 11 can be broken or cracked, and thus a breakage protection for overheating of the battery can be realized.

It should be noted that the change of the ambient temperature may be the temperature change caused by the thermal runaway when the battery fails, or the temperature change caused by the external environment of the battery. When the battery works in an external high-temperature environment, the battery will continue discharging or being charged because the pole body 1 does not meet the requirements of electric fusing. However, this external high-temperature environment places the battery at a great safety risk, while the arrangement of the expansion material 2 can break the pole body 1 in time, thus avoiding the battery from running at the high temperature.

The pole 100 in the embodiments of the present disclosure can realize the breakage protection for the overload current by means of the electric fusing, and can also realize the breakage protection for the overheating by means of the expansion material 2 expansion to break the pole 100, so that the battery using the pole 100 has both the breakage protection for the overload current and the breakage protection for the overheating, thus fully ensuring the using safety of the battery.

In some embodiments, the weak section 11 may be arranged in the middle part of the pole body 1, so that after the weak section 11 is electrically fused, the resulted high-temperature molten globule can be stopped by parts of the pole body 1 at both ends of the weak section 11, so as to avoid the case that the high-temperature molten globule drops to the pole group of the battery cell, thus further improving the protection effect.

In some embodiments, the weak section 11 has a plurality of cavities 14, and the expansion material 2 is arranged in at least a part of the cavities 14. For example, as shown in Fig. 1, the cavity 14 may be located inside or outside the weak section 11. When it is located outside the weak section 11, the cavity 14 may be an open chamber. The expansion material 2 may be filled in a part of the cavities 14. Thus, on one hand, the arrangement of the cavity 14 can weaken the structure of the weak section 11, and also can reduce the consumables and decrease the cost, and on the other hand, the cavity 14 can provide space for the arrangement of the expansion material 2, so as to avoid the expansion material 2 from protruding from an outer surface of the pole body 1, and hence avoid the case that the expansion material 2 tends to interfere with the mounting and arrangement of the pole body 1, which facilitates the assembling of the pole body 1.

In some embodiments, the expansion material 2 is arranged in a closed cavity 14, so that the expansion force generated by the expansion material 2 can be fully exerted on the weak section 11 and act in a limited space, thus ensuring the cracking effect.

In some embodiments, as shown in Fig. 1, the pole body 1 may have a split structure, the pole body 1 includes a terminal 12 and a base 13, the terminal 12 is a pole terminal, the base 13 is a pole base, and the weak section 11 is connected between the terminal 12 and the base 13. The terminal 12 may be connected to the weak section 11 by welding and located above the weak section 11, and the base 13 may also be connected to the weak section 11 by welding and located below the weak section 11. Therefore, the weak section 11 can be processed independently, thus facilitating the processing and molding of the weak section 11 and reducing the processing cost.

In some embodiments, as shown in Figs. 2, 4 and 6, the weak section 11 may include a first end plate 111 and a second end plate 112, both of which may be flat plates. The first end plate 111 may be arranged at a top of the weak section 11, and the weak section 11 is electrically connected with the terminal 12 through the first end plate 111. For example, the first end plate 111 may be connected and fixed with a bottom of the terminal 12 by welding.

The second end plate 112 is arranged at a bottom of the weak section 11, and the weak section 11 is electrically connected with the base 13 through the second end plate 112. For example, the second end plate 112 may be connected and fixed with the base 13 by welding. Therefore, it is convenient to mount and fix the weak section 11 with the terminal 12 and the base 13 respectively, and also the structural strength and the overcurrent section of a joint are ensured, thus avoiding the case that the joint tends to be electrically fused or broken.

In some embodiments, the weak section 11 includes a plate portion 113, which is connected between the first end plate 111 and the second end plate 112. A first cavity 141 is formed on one side of the plate portion 113, and a second cavity 142 is formed on the other side of the plate portion 113. The expansion material 2 is arranged in one of the first cavity 141 and the second cavity 142, and is configured to break the plate portion 113 when expanding.

For example, as shown in Figs. 2 to 5, the plate portion 113 may be a vertical plate, the first end plate 111 may be connected to the plate portion 113 and located above the plate portion 113, the second end plate 112 may be connected to the plate portion 113 and located below the plate portion 113, and the plate portion 113 may divide a space between the first end plate 111 and the second end plate 112 into the first cavity 141 and the second cavity 142. The first cavity 141 may be located on a right side of the plate portion 113, and the second cavity 142 may be located on a left side of the plate portion 113. Therefore, the structure of the weak section 11 can be simplified, which facilitates the processing and molding.

The expansion material 2 may be filled in the first cavity 141 and the first cavity 141 may be full of the expansion material 2, so that when the expansion material 2 expands, the generated expansion force can burst the plate portion 113, thus achieving the function of crashing the weak section 11.

It should be noted that when only the plate portion 113 is provided, the first cavity 141 and the second cavity 142 formed by division can be subsequently sealed in a circumferential direction by an insulator 200, thus achieving the function of storing the expansion material 2 and ensuring the storage stability of the expansion material 2.

In some embodiments, as shown in Fig. 2, the expansion material 2 is located in the first cavity 141, and a groove 1131 is formed on the plate portion 113 and is located on a side of the plate portion 113 facing the second cavity 142. For example, the groove 1131 may be a V-shaped groove, and may be located in the middle of the plate portion 113, an opening of the groove 1131 may face leftwards, and the groove 1131 may extend along a width direction (a front-rear direction) of the plate portion 113. Therefore, when the expansion material 2 expands, the plate portion 113 can be broken at the groove 1131. That is, the groove 1131 allows the plate portion 113 to have the stress concentration and hence causes the cracking of the plate portion 113, thus further ensuring the cracking effect.

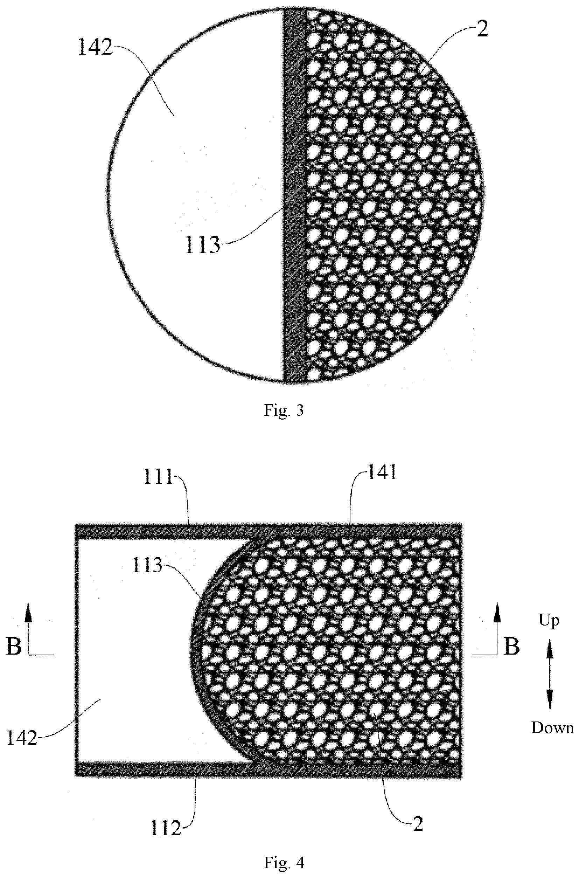

In some embodiments, as shown in Fig. 4, the plate portion 113 may be an arc-shaped plate, and the plate portion 113 may protrude towards the second cavity 142. For example, the plate portion 113 may protrude leftwards, a convex cavity may be formed on the right side of the plate portion 113, and the expansion material 2 may be filled in the first cavity 141. Therefore, an interaction area of the plate portion 113 and the expansion material 2 can be increased, so that the cracking effect can be enhanced, and also the volume of the cavity 14 for storing the expansion material 2 can be increased, to allow more expansion materials 2 to be stored, thus ensuring the strength of the expansion force.

In some embodiments, the weak section 11 includes a first cover portion 114 and a second cover portion 115, the first cover portion 114 is connected with the first end plate 111, a third cavity 143 is defined between the first cover portion 114 and the first end plate 111, the second cover portion 115 is connected with the second end plate 112, and a fourth cavity 144 is defined between the second cover portion 115 and the second end plate 112. The first cover portion 114 and the second cover portion 115 abut against each other or are electrically connected through a conductor 3, an annular cavity 145 is defined between the first cover portion 114 and the second cover portion 115, and the expansion material 2 is arranged in the annular cavity 145.

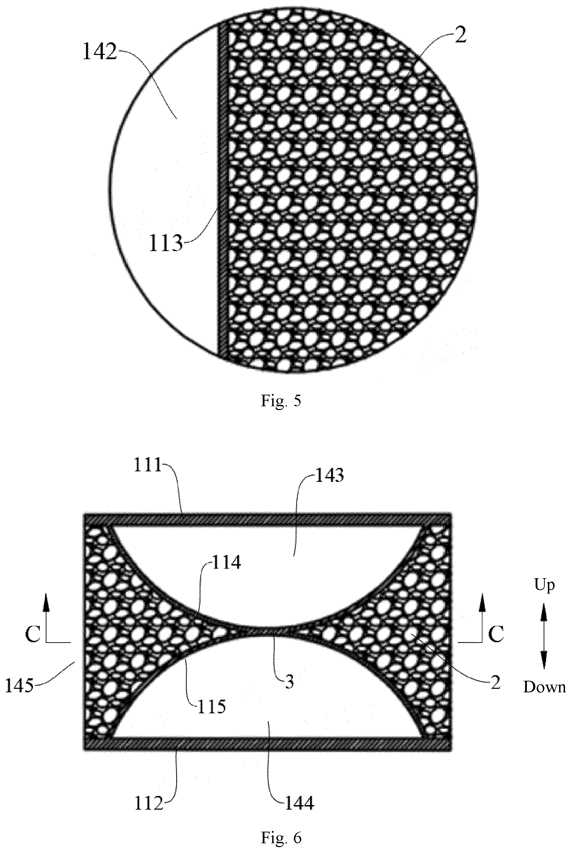

For example, as shown in Fig. 6, both the first cover portion 114 and the second cover portion 115 may be bowl-shaped. An opening of the first cover portion 114 faces upwards, and an edge of the opening of the first cover portion 114 is welded with the first end plate 111, so that a completely closed third cavity 143 is defined between the first cover portion 114 and the first end plate 111. An opening of the second cover portion 115 faces downwards, and an edge of the opening of the second cover portion 115 is welded with the second end plate 112, so that a completely closed fourth cavity 144 is defined between the second cover portion 115 and the second end plate 112.

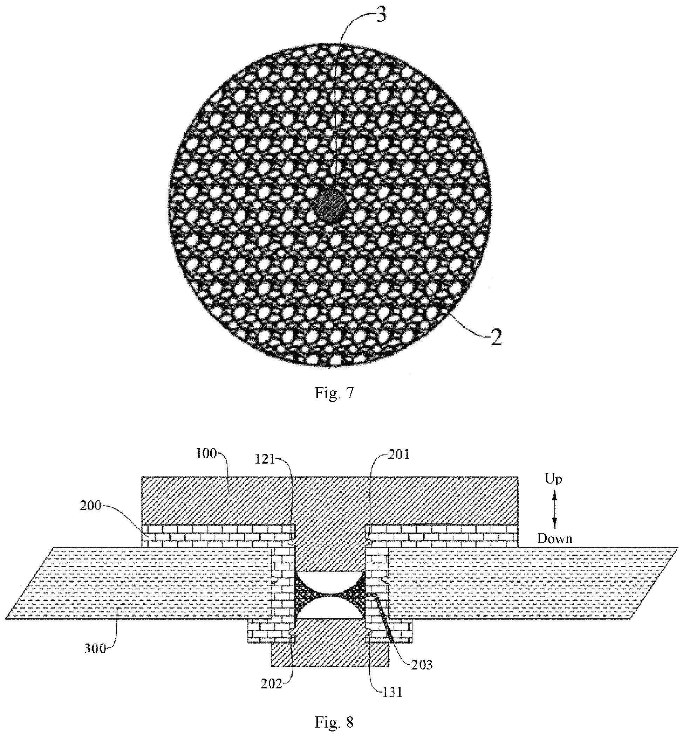

As shown in Figs. 6 and 7, a central part of the first cover portion 114 and a central part of the second cover portion 115 may be electrically connected by the conductor 3. For example, the first cover portion 114 and the second cover portion 115 may be connected by welding, and a solder joint formed by welding serves as the conductor 3, thus meeting the using requirement of electrical conduction. In some other embodiments, the first cover portion 114 and the second cover portion 115 may also be electrically connected by abutting against and contacting each other.

As shown in Fig. 6, the first cover portion 114 and the second cover portion 115 have a shape of an hourglass or a dumbbell as a whole, an open annular cavity 145 may be formed around the first cover portion 114 and the second cover portion 115, and a cross section of the annular cavity 145 is generally V-shaped. The expansion material 2 may be filled in the annular cavity 145 and the annular cavity 145 may be full of the expansion material 2.

When the expansion material 2 expands, the conductor 3, the first cover portion 114 and the second cover portion 115 may all be cracked, thus achieving the function of the breakage protection for the overheating. The arrangement of the third cavity 143 and the fourth cavity 144 can provide space for the crushing or deformation of the first cover portion 114 and the second cover portion 115, thus ensuring the cracking effect.

In some embodiments, an expansion temperature of the expansion material 2 is lower than a thermal contraction temperature of a diaphragm of the battery and higher than a thermal safety control temperature of the battery. For example, an initial expansion temperature of the expansion material 2 may be 80°C to 90°C, the thermal contraction temperature of the diaphragm of the battery may be about 125 °C, and the safety control temperature of the battery may be about 65 °C. Therefore, under the premise of not causing misjudgment, the breakage protection of the battery can be completed before the thermal failure of the battery, thus fully ensuring the using safety.

A battery according to an embodiment of the present disclosure will be described below.

As shown in Fig. 8, the battery according to the embodiment of the present disclosure includes an insulator 200 and a pole 100. The insulator 200 may be annular, and the pole 100 may be the pole described in any one of the above embodiments. The pole 100 may pass through the insulator 200, and the weak section 11 of the pole 100 is fitted in the insulator 200. A cover plate 300 may be arranged on an outer peripheral side of the insulator 200, and specifically, the cover plate 300 may be a polished aluminum plate, an outer periphery of the insulator 200 may have an annular groove, and an inner edge of the polished aluminum plate may be embedded in the annular groove.

Therefore, the insulator 200 can seal the pole 100 in a circumferential direction on a peripheral side of the pole 100. When the weak section 11 is electrically fused, the high-temperature molten globule can be limited in the space enclosed by the insulator 200, the terminal 12 and the base 13, which further avoids the case that the high-temperature molten globule drops to the pole group of the battery cell, thus ensuring the protection effect.

In some embodiments, as shown in Fig. 8, the expansion material 2 is located on an outer peripheral side of the weak section 11, and the insulator 200 has a channel 203. One end port of the channel 203 may extend to a lower end surface of the insulator 200, and the other end port of the channel 203 may extend to an inner wall surface of the insulator 200. After the pole 100 is assembled in the insulator 200, the expansion material 2 may be filled into the open cavity 14 of the weak section 11 through the channel 203. For example, the expansion material 2 may be filled into the annular cavity 145 in Fig. 6, thus facilitating the filling of the expansion material 2 into the open cavity 14.

In some embodiments, the pole 100 has a first protrusion 121 and a second protrusion 131, and the weak section 11 is located between the first protrusion 121 and the second protrusion 131. The insulator 200 has a first limiting groove 201 and a second limiting groove 202. The first protrusion 121 is fitted in the first limiting groove 201, and the second protrusion 131 is fitted in the second limiting groove 202.

For example, as shown in Fig. 8, both the first protrusion 121 and the second protrusion 131 may be annular protrusions. The first protrusion 121 may be arranged on an outer peripheral side of the terminal 12 and extend along a circumferential direction of the terminal 12 to enclose a circle, and the second protrusion 131 may be arranged on an outer peripheral side of the base 13 and extend along a circumferential direction of the base 13 to enclose a circle. Both the first limiting groove 201 and the second limiting groove 202 may be annular grooves, and the first limiting groove 201 may be located above the second limiting groove 202.

When the pole 100 and the insulator 200 are assembled, the first protrusion 121 may be embedded in the first limiting groove 201 and the second protrusion 131 may be embedded in the second limiting groove 202, so as to limit the relative displacement of the pole 100 and the insulator 200 in an axial direction, improve the assembling compactness, and also enhance the sealing between the pole 100 and the insulator 200, that is, the weak section 11 of the pole 100 can be sealed on upper and lower sides.

In the description of the present disclosure, it should be understood that relative terms such as "central", "longitudinal", "transverse", "length", "width", "thickness", "up", "down", "front", "rear", "right", "left", "vertical", "horizontal", "top", "bottom", "inner", "outer", "clockwise", "anticlockwise", "axial", "radial", "circumferential" should be construed to refer to the orientation or position as shown in the drawings, and these relative terms are only for convenience and simplification of description rather than indicating or implying that the referred device or element must have a particular orientation, and be constructed and operated in a particular orientation, and therefore should not be construed as limiting the present disclosure.

In addition, terms such as "first" and "second" are used herein for purposes of description and are not intended to indicate or imply relative importance or significance or implicitly indicate the number of technical features indicated. Therefore, the feature defined as "first" or "second" may explicitly or implicitly include at least one such feature. In the description of the present disclosure, "a plurality of" means at least two, such as two, three, etc., unless specified or limited otherwise.

In the present disclosure, unless specified or limited otherwise, the terms "mount", "couple", "connect" and "fix" should be broadly understood, for example, they may refer to the fixed connection, the detachable connection or the integration; they may refer to the mechanical connection, the electrical connection or the mutual communication; they may refer to the direct connection or the indirect connection through the intermediate medium, and they may refer to the internal communication of two elements or the interaction between two elements, unless specified otherwise. For those ordinary skilled in the art, the specific meanings of the above terms in the present disclosure may be understood according to specific situations.

In the present disclosure, unless specified or limited otherwise, a structure in which a first feature is "on" or "below" a second feature may include an embodiment in which the first feature directly contacts the second feature, and may also include an embodiment in which the first feature indirectly contacts the second feature through an intermediate medium. Furthermore, a first feature "on", "above", or "on top of' a second feature may include an embodiment in which the first feature is right "on", "above", or "on top of" the second feature, and may also include an embodiment in which the first feature is obliquely "on", "above", or "on top of" the second feature, or just means that the first feature is at a height higher than that of the second feature. A first feature "beneath", "below", or "on bottom of" a second feature may include an embodiment in which the first feature is right "beneath", "below", or "on bottom of" the second feature, and may also include an embodiment in which the first feature is obliquely "beneath", "below", or "on bottom of' the second feature, or just means that the first feature is at a height lower than that of the second feature.

In the present disclosure, the terms "one embodiment", "some embodiments", "examples", "specific examples" or "some examples" etc. mean that the specific features, structures, materials or characteristics described in connection with this embodiment or example are included in at least one embodiment or example of the present disclosure. In this specification, the schematic expressions of the above terms are not necessarily aimed at the same embodiment or example. Moreover, the specific features, structures, materials or characteristics described may be combined in any one or more embodiments or examples in a suitable manner. In addition, those skilled in the art can combine and group different embodiments or examples and features of different embodiments or examples described in this specification without mutual contradiction.

## Claims

1. A pole (100) for a battery, comprising:
a pole body (1) comprising a weak section (11), a cross-sectional area of the pole body (1) having a lower limit value at the weak section (11) to allow the pole body (1) to be electrically fused at the weak section (11) when an overload current flows through the pole body (1); and
an expansion material (2) arranged in the weak section (11), and configured to expand when an ambient temperature or a temperature of the pole body (1) is higher than a set temperature, to allow the pole body (1) to be broken at the weak section (11) and to realize a breakage protection.

2. The pole (100) according to claim 1, wherein the weak section (11) is located in a middle part of the pole body (1); and/or
the weak section (11) has a plurality of cavities (14), and the expansion material (2) is arranged in at least a part of the plurality of cavities (14).

3. The pole (100) according to claim 1 or 2, wherein the pole body (1) comprises a terminal (12) and a base (13), and the weak section (11) is connected between the terminal (12) and the base (13).

4. The pole (100) according to claim 3, wherein the weak section (11) comprises a first end plate (111) and a second end plate (112), the first end plate (111) is arranged at one end of the weak section (11), the weak section (11) is electrically connected with the terminal (12) through the first end plate (111), the second end plate (112) is arranged at the other end of the weak section (11), and the weak section (11) is electronically connected with the base (13) through the second end plate (112).

5. The pole (100) according to claim 4, wherein the weak section (11) comprises a plate portion (113), the plate portion (113) is connected between the first end plate (111) and the second end plate (112), a first cavity (141) is defined on one side of the plate portion (113), a second cavity (142) is defined on the other side of the plate portion (113), and the expansion material (2) is arranged in one of the first cavity (141) and the second cavity (142), and is configured to break the plate portion (113) when expanding.

6. The pole (100) according to claim 5, wherein the expansion material (2) is located in the first cavity (141), the plate portion (113) has a groove (1131), and the groove (1131) is located on a side of the plate portion (113) facing the second cavity (142); and/or
the plate portion (113) is an arc-shaped plate and protrudes towards the second cavity (142), and the expansion material (2) is arranged in the first cavity (141).

7. The pole (100) according to any one of claims 4-6, wherein the weak section (11) comprises a first cover portion (114) and a second cover portion (115), the first cover portion (114) is connected with the first end plate (111), a third cavity (143) is defined between the first cover portion (114) and the first end plate (111), the second cover portion (115) is connected with the second end plate (112), a fourth cavity (144) is defined between the second cover portion (115) and the second end plate (112), the first cover portion (114) and the second cover portion (115) abut against each other or are electrically connected through a conductor (3), an annular cavity (145) is defined between the first cover portion (114) and the second cover portion (115), and the expansion material (2) is arranged in the annular cavity (145).

8. The pole (100) according to any one of claims 1-7, wherein an expansion temperature of the expansion material (2) is lower than a thermal contraction temperature of a diaphragm of the battery and higher than a thermal safety control temperature of the battery; and/or
the expansion material (2) comprises at least one of a polyurethane foaming agent and a PP foaming agent.

9. A battery, comprising an insulator (200) and a pole (100) according to any one of claims 1-8, wherein the weak section (11) is fitted in the insulator (200), the expansion material (2) is located on an outer peripheral side of the weak section (11), and the insulator (200) has a channel (203) for filling the expansion material (2) to the weak section (11).

10. The battery according to claim 9, wherein the pole (100) comprises a first protrusion (121) and a second protrusion (131), the weak section (11) is located between the first protrusion (121) and the second protrusion (131), the insulator (200) has a first limiting groove (201) and a second limiting groove (202), the first protrusion (121) is fitted in the first limiting groove (201), and the second protrusion (131) is fitted in the second limiting groove (202).
